# EUROPEAN PATENT SPECIFICATION

(11) **EP 1 857 410 B1**
(45) Date of publication and mention of the grant of the patent: **05.08.2009**
(21) Application number: 07251870.7
(22) Date of filing: 04.05.2007
(51) Int. Cl.: C01B 6/21

(54) **Preparation of borohydride salts**
Herstellung von Borhydridsalzen
Préparation de sels de borohydrure

(30) Priority: 19.05.2006 US 801917 P
(43) Date of publication of application: 21.11.2007
(73) Proprietor: Rohm and Haas Company, Philadelphia, PA 19106-2399 (US)
(72) Inventor: Najim, Joseph, Peabody Massachusetts 01960 (US); Teich, Cheryl Irene, Chalfont Pennsylvania 18914 (US); Yamamoto, John Hiroshi, Andove Massachusetts 01810 (US)
(74) Representative: Buckley, Guy Julian

(56) References cited:
- US-A- 2 720 444
- US-A- 2 741 539
- US-A- 2 968 532
- FEDOR ET AL: "Potassium borohydride manufacture" INDUSTRIAL AND ENGINEERING CHEMISTRY, AMERICAN CHEMICAL SOCIETY, US, vol. 49, no. 10, 1957, pages 1664-1672, XP009089539

## Description

### Background

This invention relates generally to a method for preparing borohydride salts from a slurry of sodium borohydride and a sodium alkoxide in a liquid hydrocarbon.

Processes for production of potassium borohydride from alkoxide-containing mixtures are known, but are inefficient in that they do not result in useful products from both the borohydride and alkoxide components. For example, U.S. Pat. No. 2,720,444 describes production of potassium borohydride from a mixture containing sodium borohydride and sodium methoxide. However, the process combines the sodium borohydride with 10% excess potassium hydroxide, and no data are provided on the disposition of the excess potassium hydroxide, nor is it suggested that high-purity sodium methoxide could be isolated as a coproduct.

The problem addressed by this invention is to provide a process for producing a metal borohydride, other than sodium borohydride, and sodium methoxide.

### Statement of Invention

The present invention is directed to a method for producing a metal borohydride, M(BH₄)ₙ, where n is 1 or 2, from a slurry of sodium borohydride and a sodium alkoxide in a liquid hydrocarbon. The method comprises steps of: (a) combining said slurry with 0.99 to 1.01 equivalents of a metal salt, M(X)ₙ; and methanol; wherein M is Li, K, Rb, Cs, Mg, Ca, Sr or Ba; and X is halide, alkoxide or acetate; (b) filtering to collect M(BH₄)ₙ; and (c) separating oil and methanol liquid phases to obtain sodium methoxide in methanol solution.

### Detailed Description

Unless otherwise specified, all percentages herein are stated as weight percentages and temperatures are in °C.

In one embodiment of the invention, the metal, M, is Li, K, Ca, Sr or Ba. In a preferred embodiment of the invention, M is K. In one embodiment of the invention, the anion, X, in the metal salt is alkoxide, chloride, bromide or iodide. In a preferred embodiment of the invention, X is chloride or alkoxide. Particularly preferred metal salts include potassium methoxide, potassium chloride, calcium chloride, strontium chloride and barium chloride.

The liquid hydrocarbon used in the present invention is any hydrocarbon which is liquid at 25°C. Suitable hydrocarbons include alkanes, e.g., mineral oil; and aromatics. Mineral oil is particularly preferred. Preferably, the amount of liquid hydrocarbon is from 0.01 L/g NaBH₄ to 10 L/g NaBH₄, alternatively from 0.2 L/g NaBH₄ to 1 L/g NaBH₄.

In one embodiment of the invention in which X is an alkoxide, the alkoxide is a C₁-C₁₂ alkoxide, alternatively a C₁-C₈ alkoxide, alternatively a C₁-C₄ alkoxide. In one preferred embodiment, the alkoxide is methoxide, ethoxide, isopropoxide or t-butoxide. Methoxide is particularly preferred. Alkoxides can be generated from hydroxides and alcohols.

In one embodiment of the invention, the amount of metal salt used is from 0.995 to 1.005 equivalents with respect to the amount of sodium borohydride in the slurry, alternatively about one equivalent. In one embodiment of the invention, the sodium alkoxide and sodium borohydride in the slurry are in a molar ratio of about 3:1, alkoxide:borohydride.

For the case where M is a monovalent metal (n=1), and sodium alkoxide and sodium borohydride in the slurry are in a molar ratio of about 3:1, alkoxide:borohydride, an equation describing the reaction is as follows:

3NaOR + NaBH₄ + MX → MBH₄ + NaX + 3NaOR

MBH₄ is insoluble in the methanol/hydrocarbon reaction medium, and thus will form a precipitate. NaX may also be insoluble, depending on the nature of X. In cases where NaX is soluble, the MBH₄ can be isolated by filtration, with the filtrate containing a hydrocarbon phase, and a methanol/NaX phase. When M is divalent (n=2) and X is chloro, the reaction is as follows:

6NaOR + 2NaBH₄ + MCl₂ → M(BH₄)₂ + 2NaCl + 6NaOR

In this case, both M(BH₄)₂ and NaCl are insoluble. NaCl can be removed from the metal borohydride by washing the solids with water.

Preferably, the reaction temperature is from 0°C to 50°C, alternatively from 15°C to 40°C. Preferably, the amount of methanol added is from 10 g/g NaBH₄ to 50 g/g NaBH₄, alternatively from 12 g/g NaBH₄ to 30 g/g NaBH₄.

### Examples

### Preparation of KBH₄ (KBH) - A two liter three neck flask equipped with an overhead stirrer, thermometer, liquid addition funnel and nitrogen purge was charged with 658.2 grams of a mineral oil slurry containing 20.2% NaOCH₃ and 4.6% NaBH₄. The addition funnel was charged with a solution of 49.01g of solid KOH and 406.1 g of methanol. This material was added to the stirred slurry at a rate such that the reaction temperature of the slurry did not rise above 40°C. The consistency of the reaction slurry changed from a free flowing slurry to a clumpy dough material to a partial three-phase system. An addition 400 g of methanol was added, resulting in a three-phase system having two liquid phases and a white powdery solid in the top layer.

This three-phase slurry was initially filtered through a grade "B" ultra-coarse glass frit (70 - 100 µm) but no solids were caught by the filter. The slurry was then passed through a grade "E" extra-fine glass frit (2 to 8 µm). This filtration was done under a dynamic oil pump vacuum. The resulting solid was washed multiple times with 742 grams of hexane and the resulting solid was dried under vacuum at room temperature.
The resulting two liquids were separated using a separatory funnel.

The two liquids and solids were analyzed for % NaOCH₃ (NaOMe), %KBH₄, % NaOH, % oil and by ICP analysis.

**Table 1 Analysis of product from KOH in methanol**

| | Solids g, (yield) | Oil Layer g (yield) | CH₃OH Layer g, (yield) | Recovery |
|---|---|---|---|---|
| Wt sample(g) | 46.31 | 525.24 | 658.2 | |
| % KBH₄ | 86.21, 86.25 | 0,0 | 0.35,0.34 | |
| ICP,Na | 4.34% | 29 ppm | 10.14 % | |
| ICP, K | 61.46 | 2.6 ppm | 967 ppm | |
| ICP, B | 19.42 | 4.4 ppm | 937 ppm | |
| % NaOMe/ total alkalinity | N/A | 0,0 | 26.19.26.13 | |
| % NaOH | 7.52,7.52 | | | |
| % Oil | 1964 ppm | N/A | 1184 ppm | |
| Grams KBH₄ | 39.82 (82.1 %) | | 2.30g | 42.12/48.50=86.85 |
| Grams Oil | | 525.24 | | 525.24/553=94.89 |
| Grams NaOMe/total alkalinity | 4.63 | | 172.11 (86.5 %) | 176.74/198.94=89.26 |

These results demonstrate that KBH₄ and NaOMe both can be isolated with good purity and yield, especially with regard to K contamination in NaOMe.

**Table 2 Analysis of product from KOCH₃/methanol**

| | Solids g, (yield) | Oil Layer g (yield) | CH₃OH Layer g, (yield) | Recovery |
|---|---|---|---|---|
| Wt sample(g) | 55.44 | 408.82 | 700.51 | |
| % KBH₄ | 75.422 | 0.014 | 0.341 | |
| ICP, Na | - | - | - | |
| ICP, K | - | - | - | |
| ICP, B | - | - | - | |
| % NaOMe/ total alkalinity | | 0 | 23.060 | |
| % NaOH | 16.403 | 0 | | |
| % Oil | - | N/A | - | |
| Grams KBH₄ | 41.814 (89.43 %) | 0 | 2.38 | 44.19 / 46.75 = 94.52 |
| Grams Oil | | 530.82 | | 530.82/533.76= 99.45 |
| Grams NaOMe/total alkalinity | 9.31 | | 165.32 (86.30 %) | 174.63/191.55= 91.17 |

## Claims

1. A method for producing a metal borohydride, M(BH₄)ₙ, where n is 1 or 2, from a slurry of sodium borohydride and a sodium alkoxide in a liquid hydrocarbon; said method comprising steps of:
(a) combining said slurry with 0.99 to 1.01 equivalents of a metal salt, M(X)ₙ, and methanol, wherein M is Li, K, Rb, Cs, Mg, Ca, Sr or Ba; and X is halide, alkoxide or acetate;
(b) filtering to collect M(BH₄)ₙ; and
(c) separating oil and methanol liquid phases to obtain sodium methoxide in methanol solution.

2. The method of claim 1 in which M is K.

3. The method of claim 2 in which X is alkoxide.

4. The method of claim 3 in which alkoxide is C₁-C₄ alkoxide.

5. The method of claim 4 in which the liquid hydrocarbon is mineral oil.

6. The method of claim 1 in which X is alkoxide.

7. The method of claim 6 in which M is K.

8. The method of claim 1 in which X is Cl, Br or I.

9. The method of claim 8 in which M is K and X is Cl.

10. The method of claim 9 in which the liquid hydrocarbon is mineral oil.

## Patentansprüche

1. Verfahren zur Herstellung eines Metallborhydrids, M(BH₄)ₙ, wobei n 1 oder 2 ist, aus einer Aufschlämmung von Natriumborhydrid und einem Natriumalkoxid in einem flüssigen Kohlenwasserstoff, wobei das Verfahren die Schritte umfaßt:
(a) das Kombinieren der Aufschlämmung mit 0,99 bis 1,01 Äquivalenten eines Metallsalzes, M(X)ₙ, und Methanol, wobei M Li, K, Rb, Cs, Mg, Ca, Sr oder Ba ist, und X Halogen, Alkoxid oder Acetat ist,
(b) das Filtern, um M(BH₄)ₙ zu sammeln, und
(c) das Trennen von flüssigen Öl- und Methanolphasen, um Natriummethoxid in Methanollösung zu erhalten.

2. Verfahren nach Anspruch 1, in welchem M K ist.

3. Verfahren nach Anspruch 2, in welchem X Alkoxid ist.

4. Verfahren nach Anspruch 3, in welchem Alkoxid ein C₁-C₄ Alkoxid ist.

5. Verfahren nach Anspruch 4, in welchem der flüssige Kohlenwasserstoff Mineralöl ist.

6. Verfahren nach Anspruch 1, in welchem X Alkoxid ist.

7. Verfahren nach Anspruch 6, in weichem M K ist.

8. Verfahren nach Anspruch 1, in weichem X Cl, Br oder I ist.

9. Verfahren nach Anspruch 8, in weichem M K ist und X Cl ist.

10. Verfahren nach Anspruch 9, in welchem der flüssige Kohlenwasserstoff Mineralöl ist.

## Revendications

1. Procédé de production d'un borohydrure de métal, M(BH₄)ₙ,
où n est 1 ou 2, à partir d'une suspension épaisse de borohydrure de sodium et d'un alcoolate de sodium dans un hydrocarbure liquide ; ledit procédé comprenant les étapes de :
(a) combinaison de ladite suspension épaisse avec 0,99 à 1,01 équivalent d'un sel de métal, M(X)ₙ et du méthanol, où M est Li, K, Rb, Cs, Mg, Ca, Sr ou Ba ; et X est un halogénure, un alcoolate ou un acétate ;
(b) filtration pour recueillir M(BH₄)ₙ ; et
(c) séparation des phases liquides d'huile et de méthanol pour obtenir un méthylate de sodium dans une solution de méthanol.

2. Procédé selon la revendication 1 où M est K.

3. Procédé selon la revendication 2 où X est un alcoolate.

4. Procédé selon la revendication 3 où l'alcoolate est un alcoolate en C₁-C₄.

5. Procédé selon la revendication 4 où l'hydrocarbure liquide est une huile minérale.

6. Procédé selon la revendication 1 où X est un alcoolate.

7. Procédé selon la revendication 6 où M est K.

8. Procédé selon la revendication 1 où X est Cl, Br ou I.

9. Procédé selon la revendication 8 où M est K et X est Cl.

10. Procédé selon la revendication 9 où l'hydrocarbure liquide est une huile minérale.
